# EUROPEAN PATENT APPLICATION

(11) **EP 1 452 963 A2**
(43) Date of publication of application: **01.09.2004**
(21) Application number: 03012120.6
(22) Date of filing: 30.05.2003
(51) Int. Cl.: G06F 9/44

(54) **Providing runtime object by instantiating template-derived classes**

(30) Priority: 28.02.2003 EP 03004489
(71) Applicant: SAP Aktiengesellschaft, 69190 Walldorf (DE)
(72) Inventor: Lauterbach, Johannes, 69115 Heidelberg (DE); Koutyrine, Oleg, 69207 Sandhausen (DE)
(74) Representative: Müller-Boré & Partner Patentanwälte

(57) **Abstract**

A library (297) with classes for subsequent instantiation into a runtime object is generated from a template: First, the template (293) is provided (420) such that it corresponds to the structure of the runtime object by having element placeholders ($, $End$) for elements (H, L) and attribute placeholders (&, &) for attributes (AttH, AttL). Second, classes (297-1, 297-2) are provided (430) that form the library (297), wherein the classes correspond to the elements (H, L), wherein the classes (297-1, 297-2) have replacement instructions for the placeholders that are activated upon instantiating into the runtime object.

## Description

### Field of the Invention

The present invention generally relates to data processing and, more particularly, relates to computer systems, computer programs, and methods to provide a runtime object with computer code to control business applications.

### Background of the Invention

Software manufacturers design business and enterprise applications at design time, business organizations ("customers") use the business applications at run time.

Software manufacturers concentrate on the business requirements of their customers and provide applications that are customized for various platforms and requirements.

The applications are implemented with application specific code (hereinafter "code") in languages such as C++, Java, HTML or Visual Basic for Applications (VBA). Using object-oriented languages is convenient so that development objects are processed to runtime objects. One manufacturer usually serves multiple customers. The runtime objects need to be adapted to the particular needs of a particular customer. Therefore, the manufacturer provides an interpreter in combination with a plurality of templates. The customer uses the interpreter to provide the development objects by interpreting the templates in view of customer-specific data.

The applications are implemented on specific runtime platforms, or frameworks. Different platforms may require runtime objects in different languages to adapt to different operating systems.

There are several disadvantages of the prior art. The interpreter is complex and specifically adapted to the runtime framework. The manufacturer needs to send the code template and the interpreter to the customer.

Type consistency between development objects needs consideration, especially when a development object or the template is modified. Accidental and intentional (even malicious) changes to the templates (especially at the customer site) could lead to inconsistencies in the code. There is an ongoing need to provide improved method, systems, an computer programs to provide runtime objects (source code).

### Brief Description of the Drawings

- FIG. 1: illustrates a simplified process overview with method steps for providing a library and method steps for providing a runtime object;
- FIG. 2: illustrates the method for providing the library;
- FIG. 3: illustrates the method for providing the runtime object;
- F. 4-8: illustrate different aspects of the invention by simplifying the process overview;
- FIG. 4: illustrates the process overview in the relation of steps to functions and functional periods;
- FIG. 5: illustrates the process overview in relation of steps to persons that operate different computers;
- FIG. 6: illustrates the process overview in relation of steps to the exemplary entities manufacturer and customer;
- FIG. 7: illustrates the process overview in relation of steps to entities technology manufacturer, application manufacturer, consultant, and customer;
- FIG. 8: illustrates the process overview of FIG. 1 in relation to FIGS. 9-19 thereby leading to the description of the exemplary scenario;
- FIG. 9: illustrates a UML-diagram for the structure of an exemplary homepage as the result of optional step "defining structure";
- FIG. 10: illustrates a template for the exemplary homepage as the result of step "providing generation template";
- F. 11-12: illustrate the optional use of XML-techniques in step "providing classes for library";
- FIG. 11: illustrates details for step providing "classes for library" by sub-steps "converting generation template to XML-template" and "converting XML-template to classes";
- FIG. 12: illustrates an XML-template;
- FIG. 13: illustrates the library with the 2 classes "homepage" and "link";
- F. 14 AB: illustrates the homepage class;
- FIG. 15: illustrates the link class;
- FIG. 16: illustrates a screen-shot used for steps "identifying data" and "instantiating classes to runtime object";
- FIG. 17: illustrates an instantiator used in step instantiating;
- FIG. 18: illustrates the runtime object;
- FIG. 19: illustrates a screen-shot corresponding to step executing; and
- FIG. 20: illustrates a simplified diagram of a computer network system.

### Overview of Detailed Description

For convenience of explanation, the following detailed description has the following sections:
- Glossary
- Introduction to Method, Time, Functions and Persons
- Exemplary Scenario
- Usage Environment
- Computer Network
- Implementation System
- Reference Numbers
- Literature

The following description is presented to enable any person skilled in the art to make and use the invention, and is provided in the context of a particular application and its requirements. Various modifications to the disclosed implementations will be readily apparent to those skilled in the art, and the general principles defined herein may be applied to other implementations and applications without departing from the spirit and scope of the present invention. Thus, the present invention is not intended to be limited to the implementations shown, but is to be accorded the widest scope consistent with the principles and features disclosed herein. Whenever possible, the same reference numbers and acronyms will be used throughout the figures to refer to the same or like elements.

### Glossary

Conveniently, words are given in singular (e.g., runtime object, computer, customer).

The term "runtime object" stands for any set of computer instructions that can be invoked to run on a computer to perform the application (e.g., a tool for supply chain management SCM) or parts of the application (e.g. the user interface of the tool). Usually, runtime objects are provided in languages such as visual basic, HTML, JavaScript, XML or the like. The runtime object can also be provided as text.

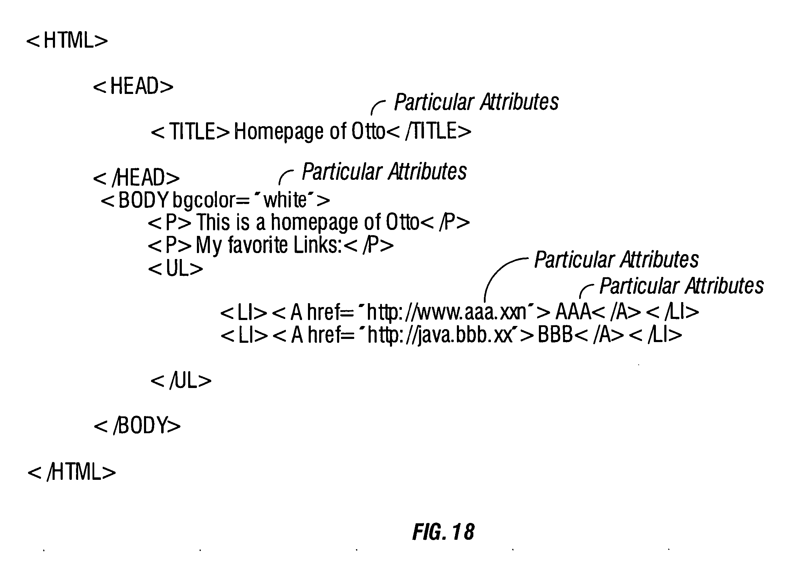

This description uses the HTML-code of a homepage application as an example (cf. FIGS. 18-19) for a runtime object. For convenience of explanation it is assumed that one runtime object is provided in a single language. A single runtime object can also use two or more languages. The term "template" stands for a document with code portions in the language of the runtime object (e.g. HTML)

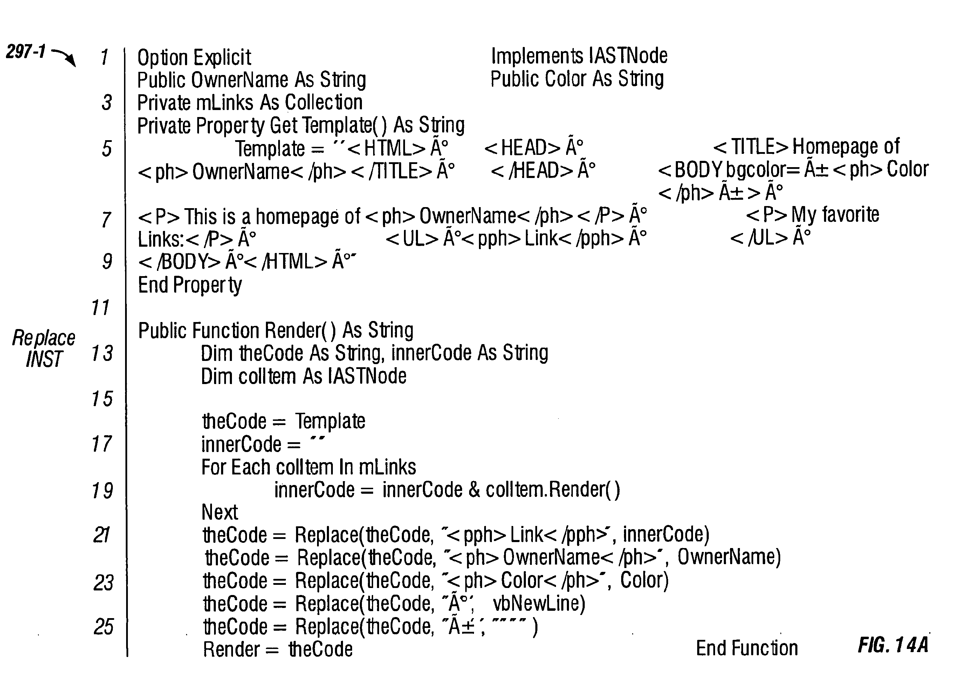

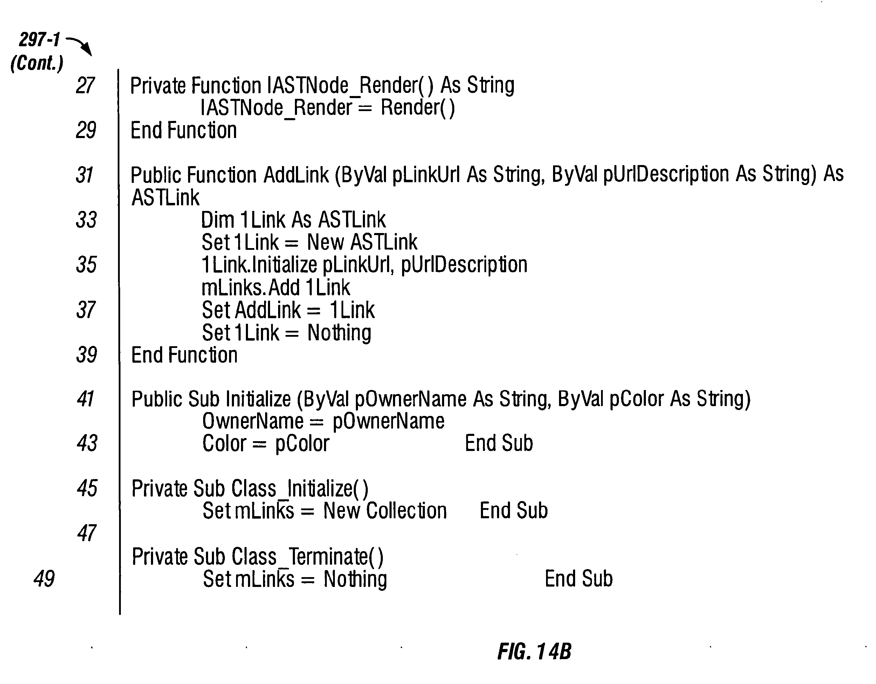

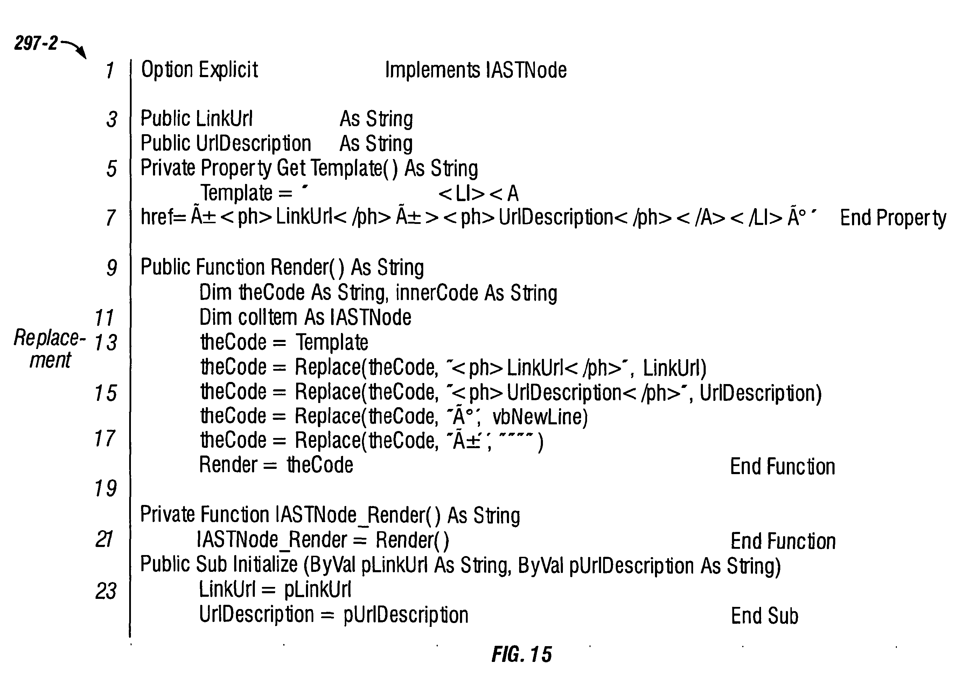

The term "class" stands for any data structure that can be converted to one ore more portions of the runtime object by adding data. This description uses the examples "Homepage, with OwnerName and Color" (cf. FIG. 14 AB) and "Link" (cf. FIG. 15).

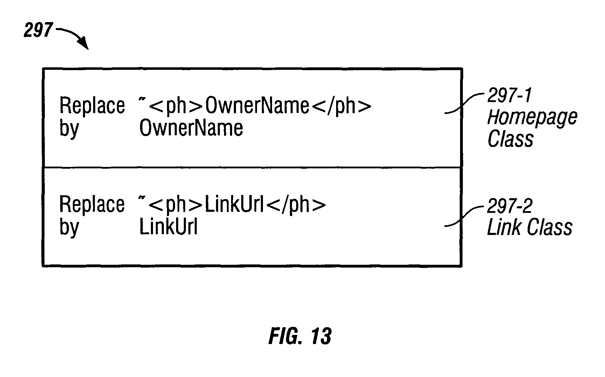

The term "library" stands for the plurality of classes (cf. FIG. 13) that are needed for a particular runtime object.

The term "XML-techniques" stands for using commercially available software
(a) to convert any form of a document (e.g., a template) into a form with extensible markup language (XML), or
(b) to convert XML into a any form.

Such techniques may add further information during any conversion (a) or (b). Such techniques may use style-sheets in Extensible Style Language (XSL) and of Extensible Style Language Transformation (XSLT).

The term "abstract syntax tree" (AST) stands for any computer-internal hierarchy representation of an object, a class or a library (as in the example). The AST can be illustrated, for example, by a diagram (i.e. tree with nodes) or by code lines (e.g. as in FIG. 14-15).

### Introduction to Method, Time, Functions and Persons

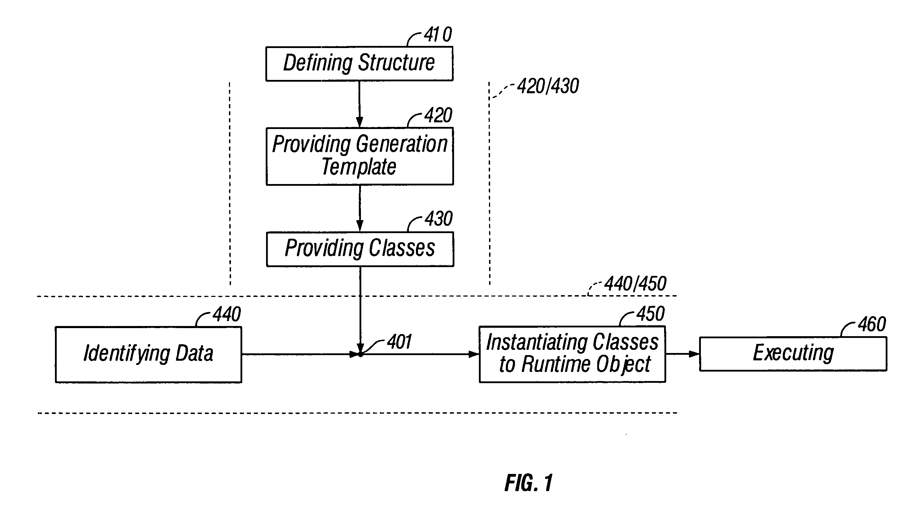

FIG. 1 illustrates a simplified process overview with method steps 420/430 for providing a library (illustrated top-down) and method steps 440/450 for providing a runtime object (left-right). The steps are performed in the order given by the arrows. Step connector 401 indicates that step 450 follows completion of steps 430 AND 440.

Method 420/430 comprises optional step 410 "defining structure", step 420 "providing generation template", and step 430 "providing classes for library".

Method 440/450 comprises step 440 "identifying data", step 450 "instantiating classes to runtime object" and - optionally - step 460 "executing runtime object".

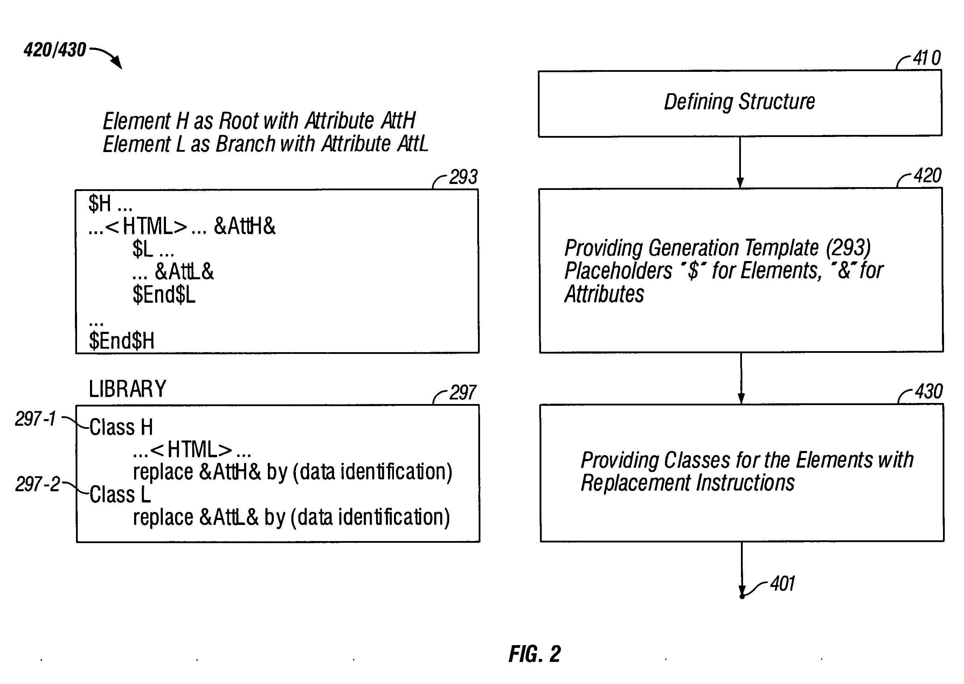

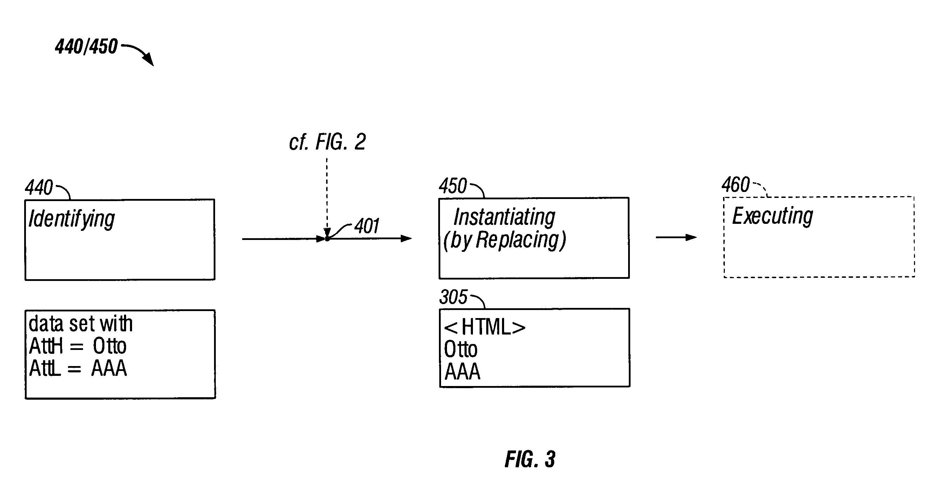

FIG. 2 illustrates method 420/430 of the present invention as a method for providing library 297 that is adapted to be instantiated into a runtime object (cf. 305 in FIG. 3). The structure of the runtime object is has been defined earlier (cf. 410, e.g., H as root element with attribute AttH; L as branch element with attribute AttL). The method steps are:
Step 420: Providing generation template 293 that corresponds to the structure of the runtime object with element placeholders (e.g., $, $End$) for elements (e.g., H, L) and with attribute placeholders (e.g., &, &) for attributes (e.g., AttH, AttL).
Step 430: Providing classes 297-1, 297-2 that form library 297, wherein the classes correspond to the elements (e.g., H, L), and wherein the classes have replacement instructions for the placeholders that are activated upon instantiating into the runtime object (cf. FIG. 3).
Preferably, template 293 is provided with element placeholders that have start portions and end portions differentiated by tag types. The example uses $ for start and $End$ for end. Persons of skill in the art can use other conventions.
Preferably, template 293 is provided with element placeholders having element identification (e.g., H for $H, $End$H; L for $L, $End$L) belonging to the start and end portions.
Preferably, template 293 is provided with element placeholders for a root element (e.g., H) and for a branch element (e.g., L). The start portions (e.g., $) and end portions (e.g., $End$) of the branch element (e.g., L) are placed between the start portions (e.g., $) and end portions (e.g., $End$) of the root element (nesting).
Preferably, template 293 is provided with attribute placeholders (e.g., &, &) being placed between the start portions (e.g., $) and end portions (e.g., $End$) of the element placeholders.
Preferably, template 293 is provided with code portions (e.g., <HTML>) in the language of the runtime object placed between start portions (e.g., $) and end portions (e.g., $End$) of the element placeholders. Preferably, classes 297-1, 297-2 are provided such that code portions stay at the original placement (i.e. as in template).
Further preferred implementations of method 420/430 are explained in connection with the other figures.

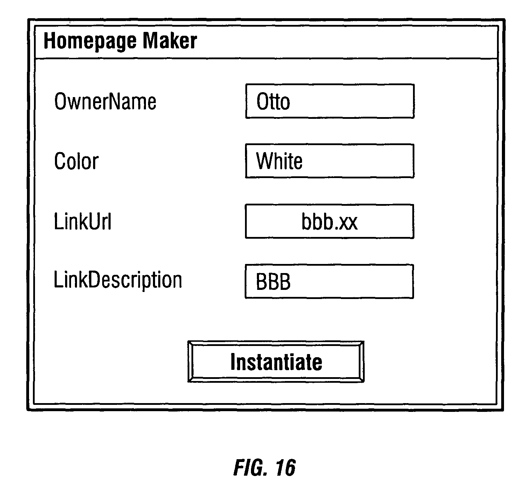

FIG. 3 illustrates the method 440/450 for providing runtime object 305 having elements and attributes. As explained in connection with FIG. 2, the object is pre-assembled by classes 297-1, 297-2 in library 297. The classes correspond to the elements (e.g., H, L). The classes have replacement instructions for attribute placeholders. The classes are based on template 293 that corresponds to the structure of runtime object 305 with element placeholders (e.g., $, $End$) for elements (e.g., H, L) and with attribute placeholders (e.g., &, &) for attributes (e.g., AttH, AttL). The steps are:
Step 440: Identifying data (e.g.. in a data set) for the attributes of the elements (e.g., H, L).
Step 450: Instantiating the classes by activating the replacement instructions, thereby replacing the attribute placeholders (e.g., &, &) with the data. As illustrated by method connector 401, instantiating 450 depends on the existence of library 297.
Details for method 440/450 (with executing 460) are illustrated in connection with the exemplary scenario (FIGS. 16-19).

Returning to FIGS. 1-3, a process for providing a runtime object is stated as the combination of both methods. The process steps are:
420: Providing template 293 that corresponds to the structure of runtime object 305 with element placeholders (e.g., $, $End$) for elements (e.g., H, L) and with attribute placeholders (e.g., &, &) for attributes (e.g., AttH, AttL).
430: Providing classes 297-1, 297-2) that form library 297, wherein the classes correspond to the elements (e.g., H, L) and wherein the classes have replacement instructions for the attribute placeholders.
440: Identifying data for the attributes of each of the elements (e.g., H, L).
450: Instantiating the classes by activating the replacement instructions, thereby replacing the attribute placeholders (e.g., &, &) with the data. Steps 410/420 and 430 can be performed in parallel; step 450 follows the completion of steps 410, 420 and 430.

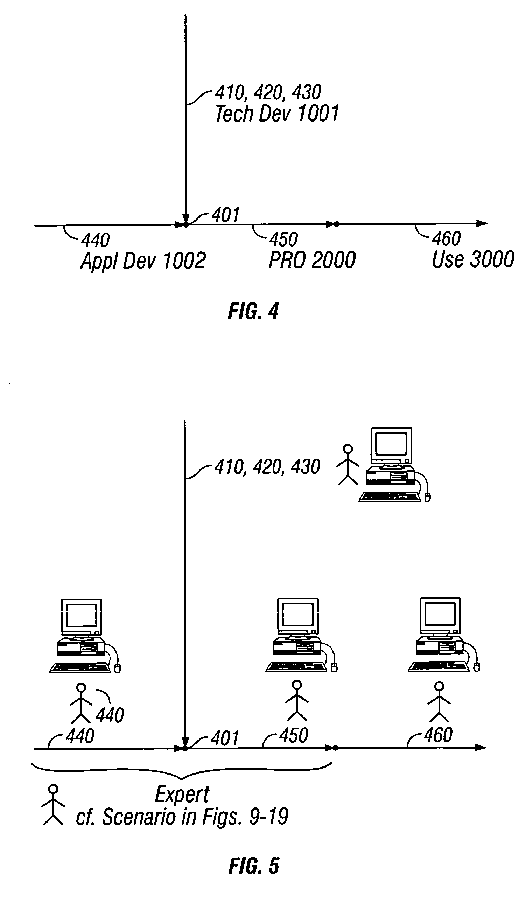

FIGS. 4-8 illustrate different aspects of the invention by simplifying the process overview. Conveniently, the step boxes are left out. Step numbers 4xx are given at the arrows.

FIG. 4 illustrates the process overview in the relation of steps to functions and functional periods.

The functions are application development (APPL DEV 1001) resulting in data; technology development (TECH DEV 1002) resulting in the library (i.e. method 420/430, optionally 410); processing (PRO 2000) using data and library and resulting in the runtime object; and using (USE 3000) comprising executing (460) the runtime object.
It is an advantage of the present invention that functions can be performed at separate time periods, such as APPL DEV time, TECH DEV time, PRO time and USE time.
Referring to the step sequence (see above), for a particular runtime object, APPL and TECH DEV are in any order (also simultaneously), PRO follows APPL and TECH DEV, and USE follows PRO.
The functional separation has further advantages: Looking from left to right, changes to the data (e.g., due to customizing) are limited to APPL DEV and do not influence TECH DEV. Looking top down, changes to template or library in TECH DEV (e.g., switching language of runtime object) are independent from APPL DEV.
Provided that data is identified according to the once-defined structure (cf. step 410), TECH DEV and APPL DEV can be performed simultaneously or one after another (in any order). Changes in either DEV function can be done in any order as well.
Repeating steps is possible. For example, APPL DEV supplies data for a plurality of runtime objects that are all based on once-in-a-time effort by TECH DEV.

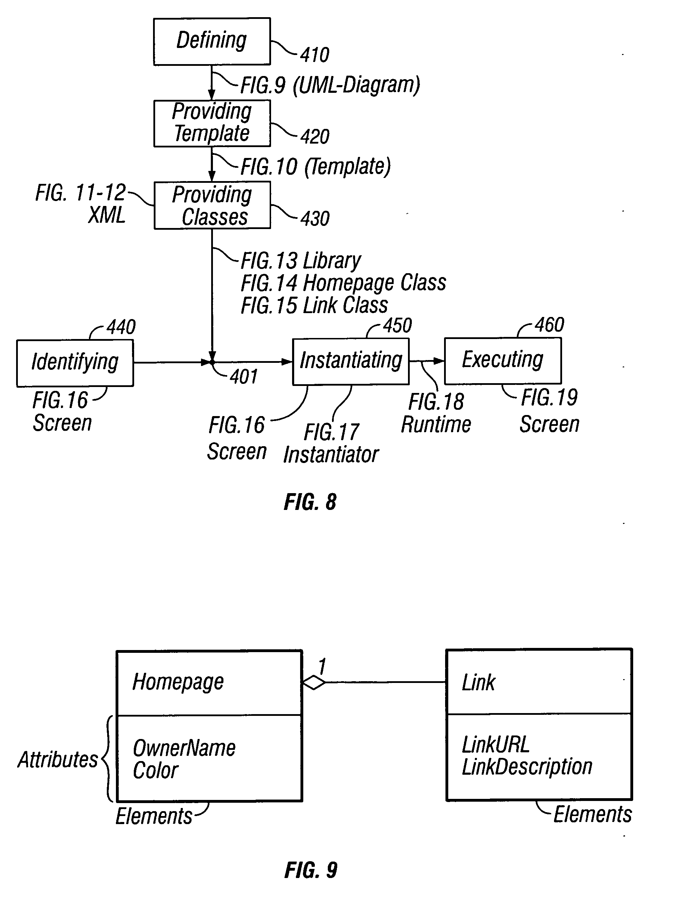

FIG. 5 illustrates the process overview in relation of steps to persons that - optionally - operate different computers (screen symbols). Step results (e.g., data, library, runtime object) are forwarded from computer to computer, for example, by data carriers or network connections. There is no need to connect the computers all of the time.
In order to assist the persons, the computers are conveniently equipped with standard tools such as a development framework (especially for 440); a repository (especially for 410, 420); a runtime framework (for 460, e.g., browser, compiler, interpreter) or the like.
It is an advantage that functions can be performed by persons of specialized skill sets: For example, an application developer is the specialist for application data (i.e. APPL DEV 1001 for step 440), a technology developer is the specialist for templates and libraries (i.e. TECH DEV 1002 for steps 410-430), a consultant combines both data and library (i.e. PRO 2000, step 450) without being a developer; and - finally - a user benefits from the runtime object (i.e. USE 3000, step 460).
The persons with specialized skill set can fully concentrate on their function without being distracted with details of the other functions. However, it might also be convenient to concentrate two or more functions with one person. This is especially important in view of the function PRO that basically takes only data and library and watches the computer to perform instantiating automatically.
In the exemplary scenario (cf. FIGS. 9-19), a single person (labeled EXPERT) performs the functions APPL DEV and PRO by operating a single computer (and using the same screen, cf. FIG. 16).
The number of computers can also be reduced; triggering functions can be automated.

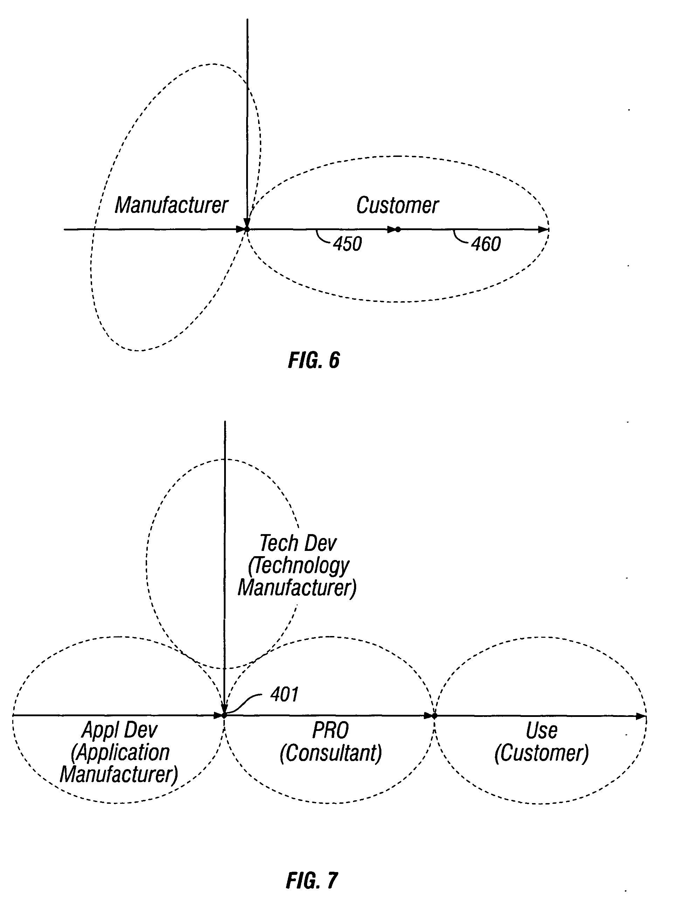

FIG. 6 illustrates the process overview in relation of steps to the entities (i.e. organizations) manufacturer and customer.
It is an advantage that the functional division can be applied to organizations such as manufacturers (e.g., performing functions APPL and TECH DEV) and customer (e.g., performing functions PRO and USE).

FIG. 7 illustrates the process overview in relation of steps to entities technology (TECH) manufacturer, application (APPL) manufacturer, consultant, and customer.

The separation in terms such as time, persons, computer, entities eases the management of modifications in terms of enabling modifications and preventing modifications.
For example, to modify the language of the runtime object (e.g., from Visual Basic to HTML), TECH DEV 1001 modifies the template, but the data set (provided by APPL DEV 1002) remains the same.
Provided that some or all of functions 1001-3000 are separated (performing function by different persons and/or entities), the ability of a person (or entity) to introduce modifications is limited to his or her function.
For example, the application developer does not modify the template; the technology developer does not modify the data set.

### Exemplary scenario

FIG. 8 illustrates the process overview of FIG. 1 in relation to FIGS. 9-19 thereby leading into the description of the exemplary scenario. The explanation conveniently starts with providing the library (top-down, FIGS. 9-15) and continues with providing the runtime object (left-right, FIGS. 16-19).

FIG. 9 illustrates a UML-diagram for the structure of an exemplary homepage. The structure definition is the result of optional step 410. UML-diagrams are used in object oriented design techniques; persons of skill in the art are familiar with the notation (cf. literature, chapter 1.2 by Forbrig). The root-element "homepage" has the following attributes:
- "OwnerName"
- "Color"
One or more branch-element "link" has the following attributes:
- "LinkURL"
- "LinkDescription"

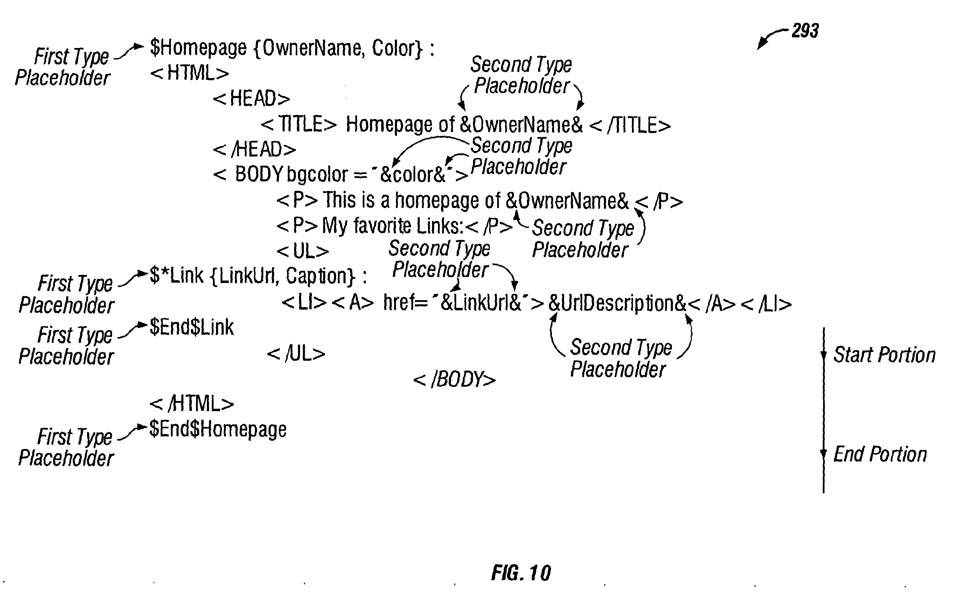

FIG. 10 illustrates template 293 for the homepage as the result of step "providing template 420". Placeholders correspond to the structure as follows:
The element placeholders (first type) have start and end portions with different tag types (e.g., $ and $End$), element identification (e.g., "Homepage") and placement to indicate root-branch hierarchy (e.g., branch inside root):
   - $Homepage (start portion of root-element)
   - $End$Homepage (end portion of root-element)
   - $*Link (start portion of branch element, * to indicate plurality)
   - $End$Link (end portion of branch element)

The $*Link placeholder (with plurality indicator *) is a single placeholder for a plurality of elements. It is an advantage that the actual number of elements will be defined by the data (cf. by function 1002 step 440) and therefore does not need to be considered in template 293.
The plurality indicator indicates a predefined number range (e.g., * standing for "zero, one or more"; + standing for "one or more").

The attribute placeholders (second type, non-differentiated tags & in pairs, enclosing the attribute name) are placed within their element placeholders:
- &OwnerName& and &Color& within element "Homepage"
- &LinkUrl& and &LinkDescription within element "Link"
Code portions in the language of runtime object 305 are placed between $ and $End$ (of element placeholders), conveniently outside the & and & (of attribute placeholders). According to the exemplary language HTML, the code has tags in the style <> </>. Conveniently, the code also has additionally text (cf. "Homepage of" in <TITLE>).
In the example, generation template 293 has been manually.

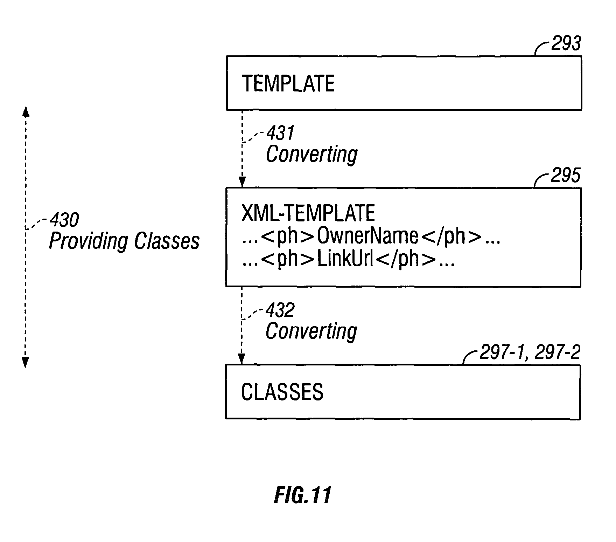

FIGS. 11-12 illustrate the optional use of XML-techniques in step "providing classes". FIG. 11 illustrates details for step providing 430 by sub-steps
- converting 431 generation template 293 to XML-template 294, and
- converting 432 XML-template 294 to classes 297.

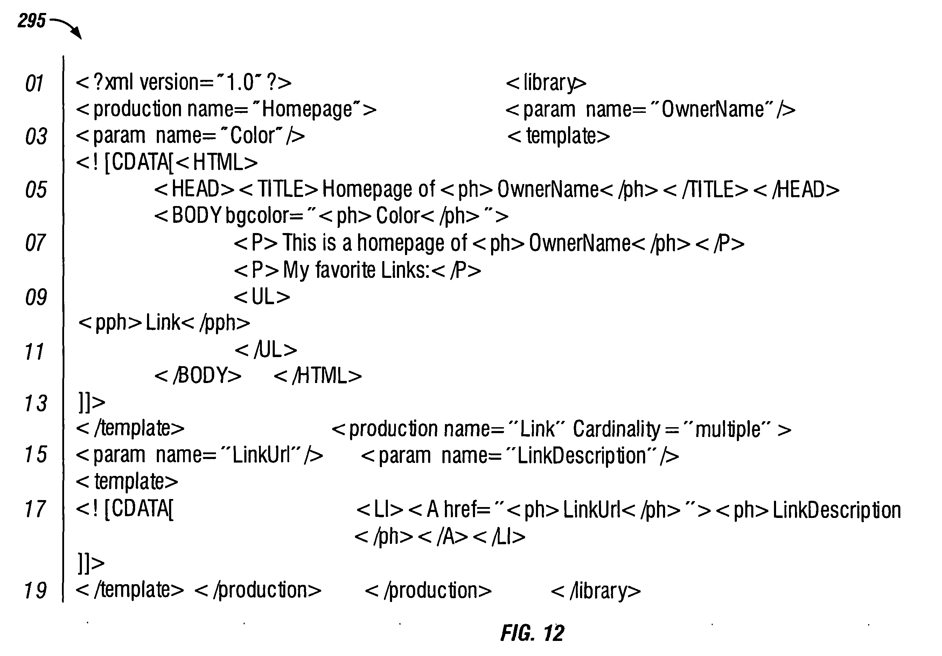

FIG. 12 illustrates XML-template 295.

Although classes 297 can be derived from template 293 directly, using XML-techniques has advantages, such as the following:
First, further information can be added automatically. Such information may customize the code and could comprise the date, manufacturer identification (cf. TECH DEV in FIG. 7), or style information. A consistency check (e.g., "All HTML tags in pairs?") would be possible as well.
Second, generation template 293 (i.e. in original form) is adapted to the skill set of a developer (cf. discussion of FIG. 5), XML-template 295 is adapted for the computer so that classes 297 can be provided without additional programming effort (XML-techniques).

FIG. 13 illustrates library 297 with the 2 classes
- homepage class 297-1, and
- link class 297-2.

Replacement instructions are simplified notated as "replace ... by ..." .The replacement instructions have placeholders (here with the tags <ph> and </ph> in XML) and identification for the data (obtained in 440, cf. FIGS. 1 and 3). Using the same identifiers (e.g., "OwnerName") in tags and in the data identification is convenient, but not required.

FIG. 14 A and its continuation 14 B illustrate details for the homepage class 297-1. Lines numbers are given left. The replacement instructions (lines 12-29) start with "public function render ( ) as string" and identify the attributes like "OwnerName" as given in line 21.

FIG. 15 illustrates details for the link class 297-2. Replacement instructions are in lines 9-20.

Classes 291-1 and 297-2 are written in the exemplary language Basis (that is different from the language HTML of the runtime object). Changing the language of the runtime object can be accomplished by changing template 293.
Classes 297-1 and 297-2 are conveniently organized in an abstract syntax tree (AST).

FIGS. 16-18 illustrate how to instantiate the classes to the runtime object. As already mentioned in connection with FIG. 7, the EXPERT conveniently performs the functions APPL DEV (i.e. step 440 identifying) and PRO (i.e. step 450 instantiating).

FIG. 16 illustrates a screen-shot "Homepage Maker" used for steps identifying 440 and instantiating 450.

While identifying data for the attributes of the homepage (step 440), the EXPERT writes exemplary attributes into a screen mask:
- particular OwnerName (e.g., "Otto")
- particular BackgroundColor (e.g., "white")
- first particular LinkURL (e.g., "http://www.aaa.xx")
- second particular LinkURL (e.g., "http://www.bbb.xx")
- first particular LinkDescription (e.g., "AAA")
- second particular LinkDescription (e.g., "BBB")

In the example of FIG. 16, the EXPERT has already completed entering the "AAA" link.
These 6 attributes form the data set needed for step 450. Operating the screen key "INSTANTIATE" activates instantiator 250.
It is an advantage that the attributes are not part of template 293 or classes 297-1, 297-2.

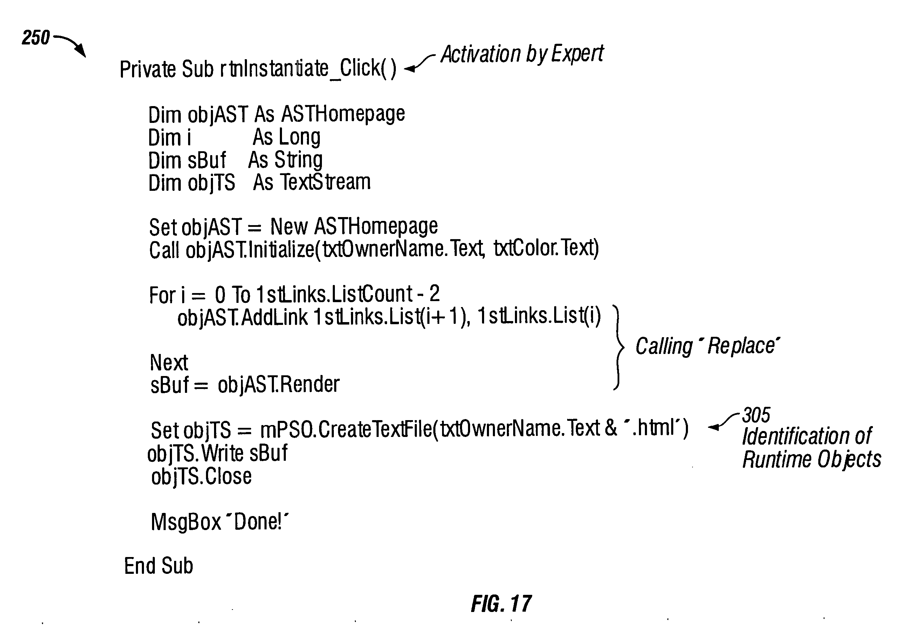

FIG. 17 illustrates instantiator 250 used in step instantiating 450. Instantiator 250 is an auxiliary tool that triggers parsing the AST of classes 297-1 and 297-2) and forwarding the data set (i.e. the particular attributes) to the replacement instructions.
In the example, instantiator 250 also provides logistical support (e.g., writing runtime object 305 into an HTML-file). It is convenient (although not required) to provide instantiator 250 by the function TECH DEV 1001 (cf. FIG. 4) and to distribute it (e.g., from manufacturer to customer, from TECH DEV to PRO) together with the classes. Instantiator 250 is - however - not specific to particular classes. One instantiator could serve different class libraries.

FIG. 18 illustrates the runtime object 305. The particular attributes (i.e. from "Otto" to "BBB") have been entered for the attribute placeholders (e.g., & &, cf. FIG. 10); the information of the element attributes is coded in HTML (e.g., Owner and Color at the position as in template 293; 2 code lines for the 2 links).

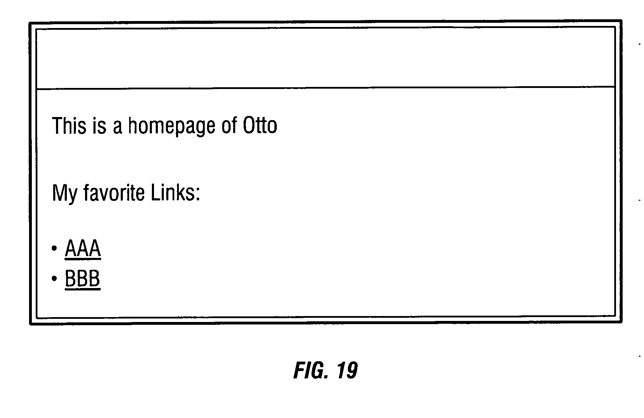

FIG. 19 illustrates a screen-shot corresponding to step executing 460. Runtime object 305 is now interpreted by a browser (exemplary runtime environment).

### Usage Environment

Having described the scenario in connection with a HTML-homepage, the following gives examples of potentially using the present invention. Persons of skill in the art are able - based on the description herein - to provide template 293 and classes 297 such that the library is adapted to be instantiated into runtime object 305 for subsequent execution in a variety of different platforms. For example, the runtime object can used in a PDA or a WAP phone.
The present invention conveniently allows providing similar runtime objects with similar data set for different computer types, for example, for a stationary computer (e.g., desktop type with broadband HTML-brower) and for a portable computer (e.g., PDA/WAP with narrowband WML-browser). Template 293 and classes 297 can be provided such that the library is adapted to be instantiated into runtime object 305 of different use in a computer, such as application class file, application project file, common registry, machine specific registry, business component, website layout. Template 293 and classes 297 can be provided such that the library is adapted to be instantiated into runtime object 305 of several languages such as VBA, HTML, C++, C, Java, JavaScript, XML, WML.

### Computer Network

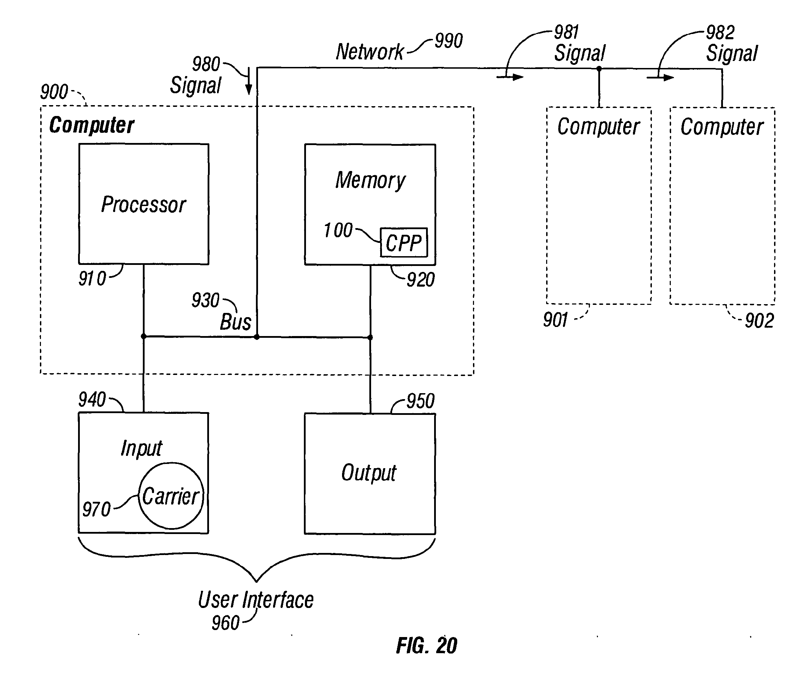

FIG. 20 illustrates a simplified diagram of a computer network system. It illustrates a simplified block diagram of exemplary computer system 999 having a plurality of computers 900, 901, 902 (or even more, cf. FIG. 1 first, second, third computer).

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980.
In respect to computer 900, computer 901/902 is sometimes referred to as "remote computer", computer 901/902 is, for example, a server, a peer device or other common network node, and typically has many or all of the elements described relative to computer 900.
Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.
Processor 910 is, for example, a central processing unit (CPU), a microcontroller unit (MCU), digital signal processor (DSP), or the like.
Memory 920 is elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick.
Optionally, memory 920 is distributed. Portions of memory 920 can be removable or non-removable. For reading from media and for writing in media, computer 900 uses well-known devices, for example, disk drives, or tape drives.
Memory 920 stores modules such as, for example, a basic input output system (BIOS), an operating system (OS), a program library, a compiler, an interpreter, and a text- processing tool. Modules are commercially available and can be installed on computer 900. For simplicity, these modules are not illustrated.

CPP 100 has program instructions and - optionally - data that cause processor 910 to execute method steps of the present invention. In other words, CPP 100 can control the operation of computer 900 and its interaction in network system 999 so that is operates to perform in accordance with the invention. For example and without the intention to be limiting, CPP 100 can be available as source code in any programming language, and as object code ("binary code") in a compiled form.
Although CPP 100 is illustrated as being stored in memory 920, CPP 100 can be located elsewhere. CPP 100 can also be embodied in carrier 970. Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer readable medium with computer readable program code to cause the computer to perform methods of the present invention. Further, signal 980 can also embody computer program product 100.
Having described CPP 100, carrier 970, and signal 980 in connection with computer 900 is convenient. Optionally, further carriers and further signals embody computer program products (CPP) to be executed by further processors in computers 901 and 902.
Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970.
Output device 950 presents instructions and data that have been processed. For example, this can be a monitor or a display, (cathode ray tube (CRT), flat panel display, liquid crystal display (LCD), speaker, printer, plotter, vibration alert device. Output device 950 can communicate with the user, but it can also communicate with further computers.
Input device 940 and output device 950 can be combined to a single device. Any device 940 and 950 can be provided optional.
Bus 930 and network 990 provide logical and physical connections by conveying instruction and data signals. While connections inside computer 900 are conveniently referred to as "bus 930", connections between computers 900-902 are referred to as "network 990". Optionally, network 990 includes gateways which are computers that specialize in data transmission and protocol conversion.
Devices 940 and 950 are coupled to computer 900 by bus 930 (as illustrated) or by network 990 (optional). While the signals inside computer 900 are mostly electrical signals, the signals in network are electrical, electromagnetic, optical or wireless (radio) signals.
Networks are commonplace in offices, enterprise-wide computer networks, intranets and the Internet (e.g., world wide web). Network 990 can be a wired or a wireless network. To name a few network implementations, network 990 can be, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.
A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), Standard Generalized Markup Language (SGML).
Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.
Computer and program are closely related. As used, phrases, such as "the computer provides" and "the program provides", are convenient abbreviation to express actions by a computer that is controlled by a program.

### Implementation System

In view of the foregoing, method and processes can be implemented by computer systems and computer programs that are summarized as follows:
A computer program has processor instructions for providing a library 297 adapted to be instantiated into a runtime object 305. The computer program is characterized in that the instructions are: first instructions for providing 420 a template 293 that corresponds to the structure of the runtime object 305 with element placeholders (e.g., $, $End$) for elements (e.g., H, L) and with attribute placeholders (e.g., &, &) for attributes (e.g., AttH, AttL); and second instructions for providing 430 classes 297-1, 297-2 that form the library 297, wherein the classes correspond to the elements (e.g., H, L), wherein the classes 297-1, 297-2 have replacement instructions for the placeholders that are activated upon instantiating into the runtime object 305.
A computer system for providing a library 297 is adapted to be instantiated into a runtime object 305. The computer system is characterized in having first computer-implemented means for providing 420 a template 293 that corresponds to the structure of the runtime object 305 with element placeholders (e.g., $, $End$) for elements (e.g., H, L) and with attribute placeholders (e.g., &, &) for attributes (e.g., AttH, AttL); and computer-implemented means for providing 430 classes 297-1, 297-2 that form the library 297, wherein the classes correspond to the elements (e.g., H, L), wherein the classes 297-1, 297-2 have replacement instructions for the placeholders that are activated upon instantiating into the runtime object 305.
A further computer system provides a runtime object 305 with computer code to control a business application. The runtime object 305 has elements and attributes. The runtime object 305 is pre-assembled by classes 297-1, 297-2 in a library 297, wherein the classes correspond to the elements (e.g., H, L), wherein the classes have replacement instructions for attribute placeholders, wherein the classes are based on a template 293 that corresponds to the structure of the runtime object 305 with element placeholders (e.g., $, $End$) for the elements (e.g., H, L) and with attribute placeholders (e.g., &, &) for the attributes (e.g., AttH, AttL), the computer system characterized in having means for identifying data (step 440) for the attributes of each of the elements (e.g., H, L); and means for instantiating (step 450) the classes by activating the replacement instructions, thereby replacing the attribute placeholders (e.g., &, &) with the data.
Computer system and computer program may use further implementations defined in dependend method claims and described in the specification. Also, it will be appreciated that modifications and variations of the present invention are covered by the above teachings.

### Reference numbers

| | | |
|---|---|---|
| | L | element "link" |
| | H | element "homepage" |
| | AttH | attribute of H |
| | AttL | attribute of L |
| | $...$End$, &...& | placeholders |
| | AST | abstract syntax tree |
| | PDA | personal digital assistant |
| | WML | wireless markup language |
| | WAP | wireless application protocol |
| | URL | unique resource locator |
| | HTML | hypertext markup language |
| | XML | extensible markup language |
| | VBA | Visual Basic for Applications |
| 1001 | APPL DEV | application development |
| 1002 | TECH DEV | technology development |
| 2000 | PRO | processing |
| 250 | | instantiator |
| 293 | | generation template |
| 295 | | XML-template |
| 297 | | library |
| 297-1 | | class "homepage" |
| 297-2 | | class "link" |
| 3000 | USE | using |
| 305 | | runtime object |
| 401 | | step connector |
| 410 | | defining structure |
| 420 | | providing generation template |
| 420/430 | | method for providing library |
| 430 | | providing classes |
| 431 | | converting |
| 432 | | converting |
| 440 | | identifying data |
| 440/450 | | method for providing runtime object |
| 450 | | instantiating |
| 460 | | executing |

### Literature

Peter Forbrig: "Objektorientierte Softwareentwicklung mit UML". Fachbuchverlag Leipzig im Carl Hanser Verlag. 2. Edition.

## Claims

1. Method (420/430) for providing a library (297) that is adapted to be instantiated into a runtime object (305), the method (420/430) comprising:
providing (420) a template (293) that corresponds to the structure of the runtime object (305) with element placeholders ($, $End$) for elements (H, L) and with attribute placeholders (&, &) for attributes (AttH, AttL);
providing (430) classes (297-1, 297-2) that form the library (297), wherein the classes correspond to the elements (H, L), wherein the classes (297-1, 297-2) have replacement instructions for the placeholders that are activated upon instantiating into the runtime object (305).

2. Method (420/430) of claim 1, wherein the template (293) is provided with element placeholders having start portions and end portions differentiated by tag types ($, $End$).

3. Method (430/430) of claim 2, wherein the template (293) is provided with element placeholders having element identification ($H, $End$H, $L, $End$L) belonging to the start and end portions.

4. Method (420/430) of claim 1, wherein the template (293) is provided with element placeholders for a root element (H) and for a branch element (L), wherein the start portions ($) and end portions ($End$) of the branch element (L) are placed between the start portions ($) and end portions ($End$) of the root element.

5. Method (420/430) of claim 4, wherein the template (293) is provided with the attribute placeholders (&, &) placed between the start portions ($) and end portions ($End$) of the element placeholders.

6. Method (420/430) of claim 5, wherein the template (293) is provided with code portions (<HTML>) in the language of the runtime object (305) placed between start portions ($) and end portions ($End$) of element placeholders.

7. The method (420/430) of claim 6, wherein the classes (297) are is provided with the code portions staying at the original placement.

8. The method (420/430) of claim 1, wherein in step providing (420) the template, single placeholders ($*) for a plurality of elements indicate the plurality by a plurality indicator (*).

9. The method (420/430) of claim 1, wherein in step providing (420) classes, the attribute placeholder change the form from tags of a first type ($) into tags of a second type (<ph>).

10. The method (420/430) of claim 1, wherein step providing (420) classes comprises to use XML-techniques.

11. The method (420/430) of claim 1, wherein providing (420) classes comprises to organize the classes in an abstract syntax tree (AST).

12. The method (420/430) of claim 1, wherein template (293) and classes (297) are provided such that the library is adapted to be instantiated into a runtime object (305) for subsequent execution in a platform selected from the group of:
• personal digital assistant (PDA),
• handheld device (with computer, phone/fax and Internet),
• wireless application protocol (WAP) phone.

13. The method (420/430) of claim 1, wherein template (293) and classes (297) are provided such that the library is adapted to be instantiated into a runtime object (305) selected from the group of application class file, application project file, common registry, machine specific registry, business component, website layout.

14. The method (420/430) of claim 1, wherein template (293) and classes (297) are provided such that the library is adapted to be instantiated into a runtime object (305) in a language selected from the group of VBA, HTML, C++, C, Java, JavaScript, XML, WML.

15. Article of manufacture comprising a computer usable medium having computer readable program code means embodied therein for implementing the method according to any of claims 1-14.

16. Method (440, 450) for providing a runtime object (305) having elements and attributes, the object being pre-assembled by classes (297-1, 297-2) in a library (297), wherein the classes correspond to the elements (H, L), wherein the classes have replacement instructions for attribute placeholders, wherein the classes are based on a template (293) that corresponds to the structure of the runtime object (305) with element placeholders ($, $End$) for the elements (H, L) and with attribute placeholders (&, &) for the attributes (AttH, AttL);
the method comprising:
identifying data (440) for the attributes of each of the elements (H, L); and
instantiating (450) the classes by activating the replacement instructions, thereby replacing the attribute placeholders (&, &) with the data.

17. Article of manufacture comprising a computer usable medium having computer readable program code means embodied therein for implementing the method according to claim 16.

18. Computer program with processor instructions for providing a library (297) adapted to be instantiated into a runtime object (305), the computer program **characterized in that** the instructions are: first instructions for providing (420) a template (293) that corresponds to the structure of the runtime object (305) with element placeholders ($, $End$) for elements (H, L) and with attribute placeholders (&, &) for attributes (AttH, AttL); and second instructions for providing (430) classes (297-1, 297-2) that form the library (297), wherein the classes correspond to the elements (H, L), wherein the classes (297-1, 297-2) have replacement instructions for the placeholders that are activated upon instantiating into the runtime object (305).

19. Process (420, 430, 440, 450) for providing a runtime object (305), comprising:
providing (420) a template (293) that corresponds to the structure of the runtime object (305) with element placeholders ($, $End$) for elements (H, L) and with attribute placeholders (&, &) for attributes (AttH. AttL);
providing (430) classes (297-1, 297-2) that form a library (297), wherein the classes correspond to the elements (H, L) and wherein the classes have replacement instructions for the attribute placeholders;
identifying data (440) for the attributes of each of the elements (H, L); and
instantiating (450) the classes by activating the replacement instructions, thereby replacing the attribute placeholders (&, &) with the data.

20. Article of manufacture comprising a computer usable medium having computer readable program code means embodied therein for implementing the process according to claim 19.

21. Computer system for providing a library (297) adapted to be instantiated into a runtime object (305), the computer system **characterized in** having first computer-implemented means for providing (420) a template (293) that corresponds to the structure of the runtime object (305) with element placeholders ($, $End$) for elements (H, L) and with attribute placeholders (&, &) for attributes (AttH, AttL); and computer-implemented means for providing (430) classes (297-1, 297-2) that form the library (297), wherein the classes correspond to the elements (H, L), wherein the classes (297-1, 297-2) have replacement instructions for the placeholders that are activated upon instantiating into the runtime object (305).

22. Computer system for providing a runtime object (305) with computer code to control a business application, the runtime object (305) having elements and attributes, the runtime object (305) being pre-assembled by classes (297-1, 297-2) in a library (297), wherein the classes correspond to the elements (H, L), wherein the classes have replacement instructions for attribute placeholders, wherein the classes are based on a template (293) that corresponds to the structure of the runtime object (305) with element placeholders ($, $End$) for the elements (H, L) and with attribute placeholders (&, &) for the attributes (AttH, AttL), the computer system **characterized in** having means for identifying data (440) for the attributes of each of the elements (H, L); and means for instantiating (450) the classes by activating the replacement instructions, thereby replacing the attribute placeholders (&, &) with the data.
